# EUROPEAN PATENT APPLICATION

(11) **EP 3 706 342 A1**
(43) Date of publication of application: **09.09.2020**
(21) Application number: 18874390.0
(22) Date of filing: 01.11.2018
(51) Int. Cl.: H04J 14/02, H04J 14/08, H04J 14/00, H04Q 11/00

(54) **PASSIVE OPTICAL NETWORK SYSTEM, AND DATA TRANSMISSION METHOD AND APPARATUS**

(30) Priority: 01.11.2017 CN 201711060525
(71) Applicant: ZTE Corporation, Shenzhen, Guangdong 518057 (CN)
(72) Inventor: ZHANG, Weiliang, Shenzhen Guangdong 518057 (CN); YUAN, Liquan, Shenzhen Guangdong 518057 (CN); GUO, Yong, Shenzhen Guangdong 518057 (CN); GENG, Dan, Shenzhen Guangdong 518057 (CN); ZHANG, Junwen, Shenzhen Guangdong 518057 (CN); WEI, Junshan, Shenzhen Guangdong 518057 (CN); TU, Zhijuan, Shenzhen Guangdong 518057 (CN); HUANG, Xingang, Shenzhen Guangdong 518057 (CN)
(74) Representative: Mozzi, Matteo
(86) International application number: PCT/CN2018/113310
(87) International publication number: WO 2019/085960

(57) **Abstract**

A Passive Optical Network (PON) system and a data transmission method and apparatus are provided. The data transmission method includes that: downstream data sent by an Optical Line Terminal (OLT) at different rates or downstream data sent by multiple OLTs is transmitted in a downstream link of a PON system on a first specified wavelength in a Time Division Multiplexing (TDM) manner; and upstream data sent to the OLT by an Optical Network Unit (ONU) at different rates or upstream data sent to multiple OLTs by the ONU is transmitted in an upstream link of the PON system on a second specified wavelength in the TDM manner.

## Description

### Cross-Interference to Related Applications

The present application claims priority to Chinese Patent Application No. 201711060525.4, submitted to the China National Intellectual Property Administration on November 01, 2017, the entire contents of which are incorporated herein by reference.

### Technical Field

The present application relates to the field of communication, and for example, to a Passive Optical Network (PON) system and a data transmission method and apparatus.

### Background

In an Electrical and Electronic Engineers (IEEE) Next Generation Ethernet PON (NGEPON) standardization process, part of operating companies tend to adopt 25Gbps as a single wavelength rate from the angle of an Ethernet PON (EPON)/Gigabit-Capable PON(GPON) evolution requirement, namely an evolution route is from an EPON/GPON to a 25Gbps PON, while part of operating companies tend to adopt 50Gbps as a single wavelength rate from the angle of a 10GEPON/XG-PON evolution requirement, namely an evolution route is from a 10GEPON/10GGPON to a 50Gbps PON. When there are requirements on both the 25GPON and the 50GPON, if two sets of systems are defined, the requirements are unlikely to be met due to wavelength resource shortage, and if the same wavelength is adopted, difficulties are greatly increased due to completely different upstream and downstream rates.

For the technical problems in the related art, there is yet no effective solution proposed at present.

### Summary

Embodiments of the present application provide a PON system and a data transmission method and apparatus, which may at least solve the problem of how to implement coexistence in a PON system or coexistence of multiple PON systems on the basis of saving wavelength resources.

According to an embodiment of the present application, a PON system is provided, which may include a downstream link, an upstream link, one or more Optical Line Terminals (OLTs) and one or more Optical Network Units (ONUs), wherein the downstream link may be configured to transmit, on a first specified wavelength in a Time Division Multiplexing (TDM) manner, downstream data sent by an OLT at different rates or downstream data sent by multiple OLTs; and the upstream link may be configured to transmit, on a second specified wavelength in the TDM manner, upstream data sent to the OLT by an ONU at different rates or upstream data sent to multiple OLTs by the ONU.

According to an embodiment of the present application, a data transmission method is provided, which may include that: downstream data sent by an OLT at different rates or downstream data sent by multiple OLTs is transmitted in a downstream link of a PON system on a first specified wavelength in a TDM manner; and upstream data sent to the OLT by an ONU at different rates or upstream data sent to multiple OLTs by the ONU is transmitted in an upstream link of the PON system on a second specified wavelength in the TDM manner.

According to an embodiment of the present application, a data transmission apparatus is provided, which may include: a first transmission module, configured to transmit, in a downstream link of a PON system on a first specified wavelength in a TDM manner, downstream data sent by an OLT at different rates or downstream data sent by multiple OLTs; and a second transmission module, configured to transmit, in an upstream link of the PON system on a second specified wavelength in the TDM manner, upstream data sent to the OLT by an ONU at different rates or upstream data sent to multiple OLTs by the ONU.

According to another embodiment of the present application, a storage medium is also provided, which may include a stored program, the program running to execute any abovementioned method.

According to another embodiment of the present application, a processor is also provided, which may be configured to run a program, the program running in the processor to execute any abovementioned method.

### Brief Description of the Drawings

The drawings described here are adopted to provide a deeper understanding to the present application and form a part of the present application. Schematic embodiments of the present application and descriptions thereof are adopted to explain the present application and not intended to form improper limits to the present application. In the drawings:
Fig. 1 is a flowchart of a data transmission method according to an embodiment of the present application;
Fig. 2 is a schematic diagram of downstream coexistence of multiple rates according to an application embodiment of the present application; and
Fig. 3 is a schematic diagram of upstream coexistence of multiple rates according to an application embodiment of the present application.

### Detailed Description of the Embodiments

The present application will be described below with reference to the drawings and in combination with the embodiments in detail. It is to be noted that the embodiments in the present application and characteristics in the embodiments may be combined without conflicts.

It is to be noted that terms "first", "second" and the like in the specification, claims and drawings of the present application are adopted not to describe a specific sequence or order but to distinguish similar objects.

An embodiment of the present application provides a PON system. The PON system may be a PON system with multiple coexisting rates and may also be a PON system with multiple coexisting PON modes. The PON system provided in the embodiment of the present application includes a downstream link, an upstream link, one or more OLTs and one or more ONUs. The downstream link is configured to transmit, on a first specified wavelength in a TDM manner, downstream data sent by an OLT at different rates or downstream data sent by multiple OLTs. The upstream link is configured to transmit, on a second specified wavelength in the TDM manner, upstream data sent to the OLT by an ONU at different rates or upstream data sent to multiple OLTs by the ONU.

It is to be noted that, when the downstream link is configured to transmit, on the first specified wavelength in the TDM manner, the downstream data sent by the OLT at different rates and the upstream link is configured to transmit, on the second specified wavelength in the TDM manner, the upstream data sent to the OLT by the ONU at different rates, the PON system may support coexistence of multiple rates, for example, coexistence of an EPON, a GPON, a 10GEPON, an XG-PON, a 25GPON and a 50GPON may be supported, but the embodiment is not limited thereto. In such case, the PON system may include one or more OLTs, and the upstream data of different rates may be sent by one OLT. However, the embodiment is not limited thereto.

When the downstream link is configured to transmit, on the first specified wavelength in the TDM manner, the downstream data sent by the multiple OLTs and the upstream link is configured to transmit, on the second specified wavelength in the TDM manner, the upstream data sent to the multiple OLTs by the ONU, the PON system may support coexistence of multiple services or multiple OLTs executing multiple services in the same PON system.

In an embodiment, if the multiple OLTs are in multiple different PON systems, coexistence of multiple PON systems may also be implemented in the manner of transmitting, in the PON systems in the TDM manner, the downstream data sent by the multiple OLTs or the upstream data received by the multiple OLTs.

Through the PON system, different data is transmitted in the upstream link and the downstream link in the TDM manner, the downstream links adopt the same wavelength and the upstream links adopt the same wavelength, so that coexistence in a PON system or coexistence of multiple PON systems may be implemented on the basis of saving wavelength resources. Therefore, the problem of how to implement coexistence in a PON system or coexistence of multiple PON systems on the basis of saving the wavelength resources may be solved.

In an embodiment, different rates correspond to different PON systems. Under a condition that the PON system may support coexistence of multiple rates, namely coexistence of multiple PON systems corresponding to the multiple rates is supported, the OLT in the PON system has an upstream bandwidth allocation capability and a downstream bandwidth allocation capability, namely the OLT may notify specific slots where corresponding ONUs receive or send data to multiple ONUs connected with the OLT. In an embodiment of the present application, the OLT in the PON system is further configured to send at least one of first indication information and second indication information to the ONU, the first indication information being configured to instruct the ONU to receive the downstream data in a first specified slot and the second indication information being configured to instruct the ONU to send the upstream data in a second specified slot according to a rate supported by the ONU.

In an embodiment of the present application, the ONU is further configured to report a rate supported by the ONU to the OLT, and the OLT is further configured to regulate a sending manner for the downstream data according to the rate supported by the ONU.

In an embodiment, the sending manner may include, but not limited to, at least one of a modulation format, a sending rate, a baud rate, a working wavelength and an adopted optical module.

In an embodiment, the modulation format may include, but not limited to, at least one of a Non-Return to Zero (NRZ) modulation format, a Pulse Amplitude Modulation 4 (PAM4) format and a Duo Binary (DB) modulation format.

In an embodiment of the present application, under a condition that the ONU supports multiple rates, the ONU is further configured to determine a working rate of the ONU according to a configuration of the OLT. For example, under a condition that the ONU supports 25Gbps and 50Gbps, the OLT configures the ONU to use 25Gbps, and in such case, the working rate, determined by the ONU, of the ONU is 25Gbps.

In an embodiment, when services of a part of ONUs in the PON system are isolated from services of the other part of ONUs, multiple OLTs may be adopted to respectively communicate with their respective subordinate ONUs, one OLT may communicate with only a part of ONUs and one ONU also communicates with only one OLT. In such case, although the same rate or the same system transmission manner is adopted for downstream transmission of the multiple OLTs, the downstream data is also required to be transmitted in the TDM manner, and the same manner is adopted for the upstream data. Therefore, in an embodiment of the present application, under a condition that the downstream link is configured to transmit, on the first specified wavelength in the TDM manner, the downstream data sent by the multiple OLTs and the upstream link is configured to transmit, on the second specified wavelength in the TDM manner, the upstream data sent to the multiple OLTs by the ONU, transmission rates of the downstream data sent by the multiple OLTs are the same, and transmission rates of the upstream data sent to the multiple OLTs by the ONU are the same.

In an embodiment, under a condition that the transmission rates of the downstream data sent by the multiple OLTs are the same and the transmission rates of the upstream data sent to the multiple OLTs by the ONU are the same, each OLT in the multiple OLTs is connected with one group of ONUs, and services of multiple groups of ONUs connected with the multiple OLTs are isolated.

In an embodiment, the transmission rates of the downstream data sent by the multiple OLTs may also be different, and the transmission rates of the upstream data sent to the multiple OLTs by the ONUs may also be different.

In an embodiment, the operation that the downstream data sent by the multiple OLTs is transmitted in the downstream link on the first specified wavelength in the TDM manner may be embodied as follows: the multiple OLTs send the data in different slots respectively and the sent downstream data is transmitted on the first specified wavelength of the downstream link. The operation that the upstream data sent to the multiple OLTs by the ONU is transmitted in the upstream link on the second specified wavelength in the TDM may be embodied as follows: the upstream data is transmitted in different slots of the upstream link respectively and the multiple OLTs receive the upstream data in the corresponding slots.

In an embodiment, each OLT in the multiple OLTs is connected with one group of ONUs, and services of multiple groups of ONUs connected with the multiple OLTs are isolated.

In an embodiment, two terminal nodes of the upstream link and the downstream link may be, but not limited to, the OLT and ONU in the PON system.

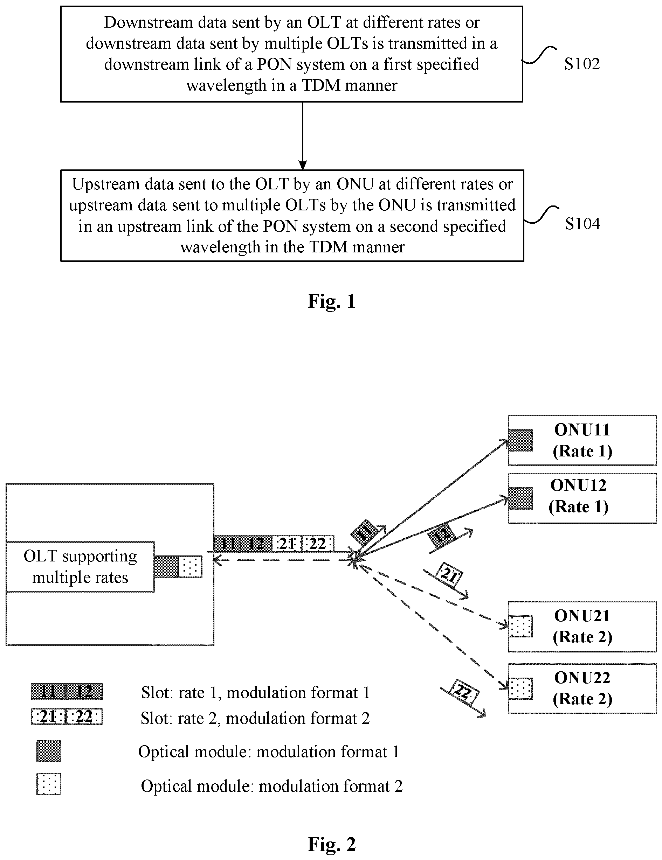

An embodiment of the present application provides a data transmission method running in the abovementioned PON system. Fig. 1 is a flowchart of a data transmission method according to an embodiment of the present application. As shown in Fig. 1, the method includes operations S102 and S104.

In S102, downstream data sent by an OLT at different rates or downstream data sent by multiple OLTs is transmitted in a downstream link of a PON system on a first specified wavelength in a TDM manner.

In S104, upstream data sent to the OLT by an ONU at different rates or upstream data sent to multiple OLTs by the ONU is transmitted in an upstream link of the PON system on a second specified wavelength in the TDM manner.

Through the operations, different data is transmitted in the upstream link and the downstream link in the TDM manner, the downstream links adopt the same wavelength and the upstream links adopt the same wavelength, so that coexistence in a PON system or coexistence of multiple PON systems may be implemented on the basis of saving wavelength resources. Therefore, the problem of how to implement coexistence in a PON system or coexistence of multiple PON systems on the basis of saving the wavelength resources may be solved.

In an embodiment, S102 and S104 do not represent an execution sequence of the operations, namely S102 may be executed at the same time of S104, or S102 may be executed before S104 is executed or S104 may be executed before S102 is executed. The embodiment is not limited thereto.

In an embodiment of the present application, the operation that the downstream data sent by an OLT at different rates is transmitted in the downstream link of the PON system on the first specified wavelength in the TDM manner may be embodied as follows: the OLT sends the downstream data at different rates in different slots on the first specified wavelength respectively. The operation that the upstream data sent to the OLT by the ONU at different rates is transmitted in the upstream link of the PON system on the second specified wavelength in the TDM may be embodied as follows: the OLT receives the upstream data at different rates in different slots on the second specified wavelength.

In an embodiment, after the operation that the OLT sends the downstream data at different rates in different slots on the first specified wavelength respectively, the method may further include that: the OLT sends first indication information to the ONU, the first indication information being configured to instruct the ONU to receive the downstream data in a first specified slot.

In an embodiment, before the operation that the OLT receives the upstream data at different rates in different slots on the second specified wavelength respectively, the method may further include that: the OLT sends second indication information to the ONU, the second indication information being configured to instruct the ONU to send the upstream data in a second specified slot according to a rate supported by the ONU.

In an embodiment, before the operation that the OLT sends the second indication information to the ONU, the method may further include that: the OLT sends configuration information to the ONU, the configuration information being configured for the ONU to determine a working rate of the ONU.

In an embodiment, the method may further include that: under a condition that a rate supported by the ONU changes, the OLT receives a rate reported by the ONU and presently supported by the ONU; and the OLT regulates a sending manner for the downstream data according to the rate presently supported by the ONU.

In an embodiment of the present application, under a condition that the downstream data sent by the multiple OLTs is transmitted in the downstream link on the first specified wavelength in the TDM manner and the upstream data sent to the multiple OLTs by the ONU is transmitted in the upstream link on the second specified wavelength in the TDM manner, transmission rates of the downstream data sent by the multiple OLTs are the same, and transmission rates of the upstream data sent to the multiple OLTs by the ONU are the same. Under a condition that the transmission rates are the same, coexistence of multiple services in the same PON system can be implemented.

In an embodiment, the transmission rates of the downstream data sent by the multiple OLTs may also be different, and the transmission rates of the upstream data sent to the OLTs by the ONUs may also be different. Under a condition that the transmission rates are different, namely the multiple OLTs are in different PON systems, coexistence of multiple PON systems can be implemented.

The operation that the downstream data sent by the multiple OLTs is transmitted in the downstream link on the first specified wavelength in the TDM manner may be embodied as follows: the multiple OLTs send the data in different slots respectively and the sent downstream data is transmitted on the first specified wavelength of the downstream link. The operation that the upstream data sent to the multiple OLTs by the ONU is transmitted in the upstream link on the second specified wavelength in the TDM may be embodied as follows: the upstream data is transmitted in different slots of the upstream link respectively and the multiple OLTs receive the upstream data in the corresponding slots.

Through the above descriptions about the implementation modes, those skilled in the art may clearly know that the methods according to the embodiment may be implemented in a manner of combining software and a required universal hardware platform and, of course, may also be implemented through hardware, but the former is a preferred implementation mode under many circumstances. Based on such an understanding, the technical solutions of the present application substantially or parts making contributions to the related art may be embodied in form of a software product. The computer software product is stored in a storage medium (for example, a Read-Only Memory (ROM)/Random Access Memory (RAM), a magnetic disk and an optical disk), including a plurality of instructions configured to enable a terminal device (which may be a mobile phone, a computer, a server, a network device or the like) to execute the method of each embodiment of the present application.

An embodiment of the present application provides a data transmission apparatus, which includes a first transmission module and a second transmission module.

The first transmission module is configured to transmit, in a downstream link of a PON system on a first specified wavelength in a TDM manner, downstream data sent by an OLT at different rates or downstream data sent by multiple OLTs.

The second transmission module is configured to transmit, in an upstream link of the PON system on a second specified wavelength in the TDM manner, upstream data sent to the OLT by an ONU at different rates or upstream data sent to multiple OLTs by the ONU.

Through the apparatus, different data is transmitted in the upstream link and the downstream link in the TDM manner, the downstream links adopt the same wavelength and the upstream links adopt the same wavelength, so that coexistence in a PON system or coexistence of multiple PON systems may be implemented on the basis of saving wavelength resources. Therefore, the problem of how to implement coexistence in a PON system or coexistence of multiple PON systems on the basis of saving the wavelength resources may be solved.

In an embodiment, the first transmission module and the second transmission module may be connected and may also not be connected, and the embodiment has no limitation on the connection, namely the first transmission module and the second transmission module may be independent modules and may also be interconnected modules.

In an embodiment of the present application, the first transmission module may include the OLT, the ONU and the upstream link between the OLT and the ONU, and the second transmission module may include the OLT, the ONU and the downstream link between the OLT and the ONU. The embodiment is not limited thereto.

In an embodiment of the present application, the OLT is configured to send the downstream data at different rates in different slots on the first specified wavelength respectively, and the OLT is configured to receive the upstream data at different rates in different slots on the second specified wavelength.

In an embodiment, the OLT is configured to send first indication information to the ONU, the first indication information being configured to instruct the ONU to receive the downstream data in a first specified slot.

In an embodiment, the OLT is configured to send second indication information to the ONU, the second indication information being configured to instruct the ONU to send the upstream data in a second specified slot according to a rate supported by the ONU.

In an embodiment, the OLT is configured to send configuration information to the ONU, the configuration information being configured for the ONU to determine a working rate of the ONU.

In an embodiment, under a condition that a rate supported by the ONU changes, the OLT is configured to receive a rate reported by the ONU and presently supported by the ONU; and the OLT regulates a sending manner for the downstream data according to the rate presently supported by the ONU.

In an embodiment of the present application, the multiple OLTs are configured to send the downstream data in different slots respectively, the sent downstream data being transmitted on the first specified wavelength of the downstream link; and the upstream data is transmitted in different slots of the upstream link, and the multiple OLTs are further configured to receive the upstream data in the corresponding slots.

In an embodiment, the transmission rates of the downstream data sent by the multiple OLTs are the same or different, and the transmission rates of the upstream data sent to the multiple OLTs by the ONUs are the same or different.

An embodiment of the present application provides a storage medium, which includes a stored program, the program running to execute any abovementioned method.

In the embodiment, the storage medium may include, but not limited to, various medium capable of storing program codes such as a U disk, a ROM, a RAM, a mobile hard disk, a magnetic disk or an optical disk.

An embodiment of the present application provides a processor, which is configured to run a program, the program running to execute the operations in any abovementioned method.

In an embodiment, specific examples in the embodiment may refer to the examples described in the abovementioned embodiments and exemplary implementation modes and will not be elaborated in the embodiment.

For better understanding the present application, the present application will be explained below in combination with application embodiments in detail.

For solving the problem of wavelength resource shortage and sharing a wavelength by different rates, the application embodiment discloses a PON system architecture with multiple coexisting PON systems. Upstream data is transmitted on an upstream wavelength in a TDM manner, and downstream data is transmitted on a downstream wavelength in the TDM manner.

Under a normal condition, ONUs adopting the same transmission rate or transmission manner are connected with the same OLT. However, in some cases, for example, services of a part of ONUs are isolated from services of the other part of ONUs, multiple OLTs may be adopted to respectively communicate with their respective subordinate ONUs, one OLT communicating with only part of ONUs and one ONU also communicating with only one OLT. In such case, although the same rate or the same system transmission manner is adopted for downstream transmission of the multiple OLTs, downstream data is also required to be transmitted in the TDM manner.

It is to be noted that the upstream data may be upstream data sent by different OLTs at the same transmission rate, may also be upstream data sent by different OLTs at different transmission rates, and may also be upstream data sent by the same OLT at different transmission rates. The downstream data may be downstream data received by different OLTs at the same transmission rate, may also be downstream data received by different OLTs at different transmission rates, and may also be downstream data received by the same OLT at different transmission rates.

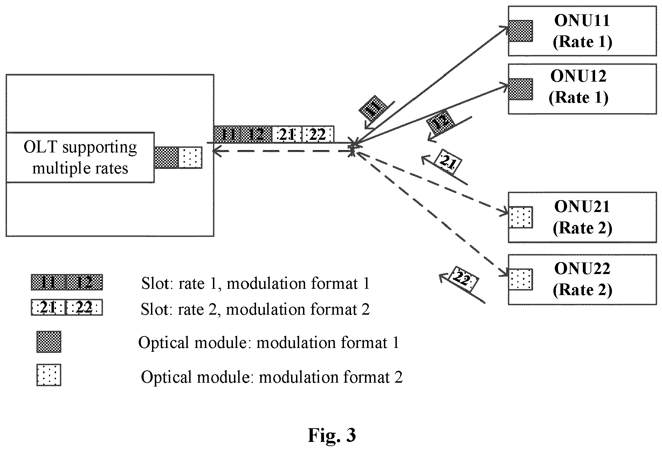

Descriptions will be made below with the condition that the upstream data is upstream data sent by the same OLT at different transmission rates and the downstream data is downstream data received by the same OLT at different transmission rates as an example, namely the provided PON system architecture supports multiple rates, for data of different rates, the TDM working manner on the same upstream wavelength is supported and the TDM working manner on the same downstream wavelength is also supported. Data of different rates are sent and received in different slots, and different sending manners are adopted for different rates in the corresponding slots, for example, different modulation formats may be adopted for the same baud rate, or the same modulation format may be adopted for different baud rates. A sender (OLT) may timely regulate a sending manner of the OLT according to a rate supported by a target ONU and a receiver (ONU) may timely regulate a receiving manner according to an instruction in a frame sent by the sender. Fig. 2 is a schematic diagram of downstream coexistence of multiple rates according to an application embodiment of the present application, and Fig. 3 is a schematic diagram of upstream coexistence of multiple rates according to an application embodiment of the present application. As shown in Fig. 2 and Fig. 3, the OLT regulates a receiving manner according to bandwidth allocation, and the ONU determines whether to receive the corresponding slot or not according to the instruction in the frame.

In the PON system, the OLT may support sending and receiving of data at different rates, the ONU may fixedly support a working mode (for example, fixedly supporting rate 25Gbps or fixedly supporting rate 50Gbps) or support multiple working modes (for example, not only supporting rate 25Gbps but also supporting rate 50Gbps), and the ONU, when supporting multiple working modes, may work in one mode according to a configuration of the OLT.

In the PON system, when the working mode of the ONU can be regulated, the OLT finds that the ONU has a capability of supporting multiple rates and may regulate the working mode of the OLT itself or set the working mode of the ONU according to the rate presently supported by the ONU.

Descriptions will be made below with coexistence of a 25Gbps PON and a 50Gbps PON as an example.

### Application embodiment 1

During NGEPON standardization, the 25GPON and the 50GPON are considered as standards of the same generation, a downstream wavelength adopts 1,330nm, an upstream wavelength adopts 1,280nm, and the 25GPON and the 50GPON adopt the same optical module, the same baud rate and different modulation formats. It is to be noted that the modulation formats may include at least one of an NRZ modulation format, a PAM4 format and a DB modulation format. Multiple combination manners may be adopted for different modulation formats adopted by the 25GPON and the 50GPON. For example, when the NRZ modulation format is adopted, the system works at 25Gbps, namely symmetric 25GPON; and when the PAM4 format is adopted, the system works at 50Gbps, namely symmetric 50GPON. The embodiment is not limited thereto.

Except different modulation formats, the 25GPON and the 50GPON adopt the same upstream/downstream wavelength, optical module and baud rate, etc.

In an embodiment, the optical module may be, but not limited to, an OLT, an ONU and the like.

### Application embodiment 2

The 25GPON and 50GPON based on application embodiment 1 may coexist in the same system.
1: The 25GPON and the 50GPON work on the 1,330nm downstream wavelength and adopt the TDM working manner, and the OLT sends 25Gbps data and 50Gbps data in different slots respectively.
   (1) The OLT has a downstream bandwidth allocation capability, and the ONU receives the data in the corresponding slot according to the instruction of the OLT. It is to be noted that the downstream bandwidth allocation capability refers, but not limited, to that the OLT has the following capability: indicating specific slots where corresponding ONUs in the system receive downstream data.
   (2) The OLT indicates information of a rate, a payload length and the like in the corresponding slot, and the ONU parses the corresponding rate and payload and the like according to the indication.
2: The 25GPON and the 50GPON work on the 1,280 upstream wavelength and adopt the TDM working manner. The OLT allocates an upstream bandwidth and sends the allocated upstream bandwidth to the ONU, and the ONU sends data in the respective upstream bandwidth according to the specified rate. The OLT has the upstream bandwidth allocation capability.
3: The 25GPON and the 50GPON adopt different modulation manners.
4: The OLT simultaneously supports sending and receiving of 25Gbps and 50Gbps data.
5: The ONU may optionally support 25Gbps and 50Gbps, but the ONU works in one rate mode according to the configuration of the OLT, for example, only supporting 25Gbps or only supporting 50Gbps. For example, the ONU may be, an ONU 25G or an ONU 50G.
6: The 25Gbps and 50Gbps data are sent and received in different slots respectively, the OLT may timely regulate its own sending rate and receiving rate according to a receiving rate and sending rate of the ONU, and the ONU supporting the rates 25Gbps and 50Gbps may regulate its own sending rate and receiving rate according to the configuration of the OLT.
7: The OLT discovers the capability supported by the ONU and may regulate the working mode of the OLT itself or set the working mode of the ONU according to the capability supported by the ONU.

### Application embodiment 3

During NGEPON standardization, the 25GPON and the 50GPON are considered as standards of the same generation, the downstream wavelength adopts 1,330nm, the upstream wavelength adopts 1,280nm, and the 25GPON and the 50GPON adopt the same optical module and different baud rates. When the baud rate of 25Gbps is adopted, the system works at 25Gbps, namely symmetric 25GPON. When the baud rate of 50Gbps is adopted, the system works at 50Gbps, namely symmetric 50GPON.

Except different baud rates adopted by the 25GPON and the 50GPON, the optical module adopts the same modulation format to support the 25GPON and the 50GPON, and the upstream/downstream wavelength is the same.

In an embodiment, both the 25GPON and the 50GPON may adopt, but not limited to, the NRZ modulation format or the PAM4 format or the DB modulation format if the 25GPON and the 50GbpsPON adopt the same modulation format.

### Application embodiment 4

The 25GPON and 50GPON based on application embodiment 3 may coexist in the same system.
1: The 25GPON and the 50GPON work on the 1,330nm downstream wavelength and adopt the TDM working manner, and the OLT sends 25Gbps data and 50Gbps data in different slots respectively.
   (1) The OLT has a downstream bandwidth allocation capability, and the ONU receives the data in the corresponding slot according to the instruction of the OLT. In an embodiment, the downstream bandwidth allocation capability refers, but not limited, to that the OLT has the following capability: indicating specific slots where corresponding ONUs in the system receive downstream data.
2: The 25GPON and the 50GPON work on the 1,280nm upstream wavelength and adopt the TDM working manner. The OLT allocates an upstream bandwidth and sends the allocated upstream bandwidth to the ONU, and the ONU sends data in the respective upstream bandwidth according to the specified rate. The OLT has the upstream bandwidth allocation capability.
3: The 25GPON adopts the baud rate of 25Gbps, and the 50GPON adopts the baud rate of 50Gbps.
4: The OLT simultaneously supports sending and receiving of 25Gbps and 50Gbps data.
5: The ONU may optionally support 25Gbps and 50Gbps, but may work in only one rate mode according to the configuration of the OLT, for example, only supporting 25Gbps or only supporting 50Gbps.
6: The 25Gbps and 50Gbps data are sent and received in different slots respectively, the OLT may timely regulate its own sending rate and receiving rate according to a receiving rate and sending rate of the ONU, and the ONU supporting the rates 25Gbps and 50Gbps may regulate its own sending rate and receiving rate according to the setting of the ONU.
7: The OLT discovers the capability supported by the ONU and may regulate the working mode of the OLT itself or set the working mode of the ONU according to the capability supported by the ONU.

### Application embodiment 5

After a 25GPON system is deployed, there is a requirement on evolution to the 50GPON. For example, a bandwidth requirement of a user is increased, or cost of the 50GPON is reduced.

The application embodiment is executed based on application embodiment 2 and application embodiment 4, and the 25GPON system is gradually evolved to a 50GPON system.
1: A 25GPON OLT is changed to a hybrid OLT supporting the 25GPON and the 50GPON. It is to be noted that changing the 25GPON OLT to the hybrid OLT supporting the 25GPON and the 50GPON may be implemented by, but not limited to, changing a working mode of the OLT (for example, changing the OLT from a working mode supporting the 25GPON to a working mode supporting both the 25GPON and the 50GPON), for example, directly changing the OLT.
2: A 25GPON ONU is upgraded to a 50GPON ONU in a manner of changing the modulation format, or the 25GPON ONU is directly changed to the 50GPON ONU. It is to be pointed out that, when designs of an Optical Distribution Network (ODN), an OLT and an ONU do not meet a power budget requirement, methods of increasing transmitted optical power, improving receiving flexibility, enhancing Forward Error Correction (FEC), adding an amplifier and the like may be adopted to ensure that the ODN, the OLT and the ONU meet the power budget requirement.
3: In an evolution process of upgrading the 25GPON ONU to the 50GPON ONU, the OLT and the PON system work in a 25G/50G hybrid mode.
4: After all 25GPON ONUs are upgraded to 50GPON ONUs, the OLT and the PON system may work in a 50G mode.

### Application embodiment 6

During deployment of the 50GPON system, when the ONU is relatively far from the OLT or quality of branch optical fiber lines of some ONUs are relatively poor, if part of ONUs work in the 50GPON, a best effect may not be achieved, and rate reduction to the 25GPON for running is required.

The application embodiment is executed based on application embodiment 2 and 4, and the 50GPON system is degenerated to the 25GPON/50GPON hybrid running mode.

The 50GPON OLT is switched to the 25G/50G hybrid mode.

The 50GPON ONU with relatively poor link quality reduces the rate to the 25GPON ONU working mode by changing the modulation format to the modulation format used by the 25GPON ONU.

The OLT and the PON system work in the 25G/50G hybrid mode.

It is apparent that those skilled in the art should know that each module or each operation of the present application may be implemented through a universal computing device. They may be concentrated in a single computing device or distributed in a network formed by multiple computing devices. Optionally, they may be implemented by program codes executable for the computing devices and thus may be stored in a storage device for execution with the computing devices. Moreover, in some cases, the shown or described operations may be executed in sequences different from those described here, or may form various integrated circuit modules respectively, or multiple modules or operations therein may form a single integrated circuit module for implementation. Therefore, the present application is not limited to any specific hardware and software combination.

## Claims

1. A Passive Optical Network, PON, system, comprising a downstream link, an upstream link, one or more Optical Line Terminals, OLTs, and one or more Optical Network Units, ONUs, wherein the downstream link is configured to transmit, on a first specified wavelength in a Time Division Multiplexing, TDM, manner, downstream data sent by an OLT at different rates or downstream data sent by multiple OLTs; and the upstream link is configured to transmit, on a second specified wavelength in the TDM manner, upstream data sent to the OLT by an ONU at different rates or upstream data sent to multiple OLTs by the ONU.

2. The PON system as claimed in claim 1, wherein, under a condition that the downstream link is configured to transmit, on the first specified wavelength in the TDM manner, the downstream data sent by the OLT at different rates and the upstream link is configured to transmit, on the second specified wavelength in the TDM manner, the upstream data sent to the OLT by the ONU at different rates, the OLT is configured to send the downstream data at different rates in different slots on the first specified wavelength respectively and receive the upstream data at different rates in different slots on the second specified wavelength.

3. The PON system as claimed in claim 2, wherein
the OLT is further configured to send at least one of first indication information and second indication information to the ONU, the first indication information being configured to instruct the ONU to receive the downstream data in a first specified slot and the second indication information being configured to instruct the ONU to send the upstream data in a second specified slot according to a rate supported by the ONU.

4. The PON system as claimed in claim 2, wherein the ONU is further configured to report a rate supported by the ONU to the OLT; and the OLT is further configured to regulate a sending manner for the downstream data according to the rate supported by the ONU.

5. The PON system as claimed in claim 2, wherein, under a condition that the ONU supports multiple rates, the ONU is further configured to determine a working rate of the ONU according to a configuration of the OLT.

6. The PON system as claimed in claim 1, wherein, under a condition that the downstream link is configured to transmit, on the first specified wavelength in the TDM manner, the downstream data sent by the multiple OLTs and the upstream link is configured to transmit, on the second specified wavelength in the TDM manner, the upstream data sent to the multiple OLTs by the ONU, transmission rates of the downstream data sent by the multiple OLTs are the same or different, and transmission rates of the upstream data sent to the multiple OLTs by the ONU are the same or different.

7. The PON system as claimed in claim 6, wherein, under a condition that the transmission rates of the downstream data sent by the multiple OLTs are the same and the transmission rates of the upstream data sent to the multiple OLTs by the ONU are the same, each OLT in the multiple OLTs is connected with one group of ONUs, and services of multiple groups of ONUs connected with the multiple OLTs are isolated.

8. A data transmission method, comprising:
transmitting, in a downstream link of a Passive Optical Network, PON, system on a first specified wavelength in a Time Division Multiplexing, TDM, manner, downstream data sent by an Optical Line Terminal, OLT, at different rates or downstream data sent by multiple OLTs; and
transmitting, in an upstream link of the PON system on a second specified wavelength in the TDM manner, upstream data sent to the OLT by an Optical Network Unit, ONU, at different rates or upstream data sent to multiple OLTs by the ONU.

9. The method as claimed in claim 8, wherein
transmitting, on the first specified wavelength in the TDM manner, the downstream data sent by an OLT at different rates in the downstream link of the PON system comprises: sending, by the OLT, the downstream data at different rates in different slots on the first specified wavelength respectively; and
transmitting, on the second specified wavelength in the TDM manner, the upstream data sent to the OLT by the ONU in the downstream link of the PON system comprises: receiving, by the OLT, the upstream data at different rates in different slots on the second specified wavelength.

10. The method as claimed in claim 9, after sending, by the OLT, the downstream data at different rates in different slots on the first specified wavelength respectively, further comprising: sending, by the OLT, first indication information to the ONU, the first indication information being configured to instruct the ONU to receive the downstream data in a first specified slot.

11. The method as claimed in claim 9, before receiving, by the OLT, the upstream data at different rates in different slots on the second specified wavelength respectively, further comprising: sending, by the OLT, second indication information to the ONU, the second indication information being configured to instruct the ONU to send the upstream data in a second specified slot according to a rate supported by the ONU.

12. The method as claimed in claim 11, before sending, by the OLT, the second indication information to the ONU, further comprising:
sending, by the OLT, configuration information to the ONU, the configuration information being configured for the ONU to determine a working rate of the ONU.

13. The method as claimed in claim 9, further comprising:
under a condition that a rate supported by the ONU changes, receiving, by the OLT, a rate reported by the ONU and presently supported by the ONU; and
regulating, by the OLT, a sending manner for the downstream data according to the rate presently supported by the ONU.

14. A data transmission apparatus, comprising:
a first transmission module, configured to transmit, in a downstream link of a Passive Optical Network, PON, system on a first specified wavelength in a Time Division Multiplexing, TDM, manner, downstream data sent by an Optical Line Terminal, OLT, at different rates or downstream data sent by multiple OLTs; and
a second transmission module, configured to transmit, in an upstream link of the PON system on a second specified wavelength in the TDM manner, upstream data sent to the OLT by an Optical Network Unit, ONU, at different rates or upstream data sent to multiple OLTs by the ONU.

15. A storage medium, comprising a stored program, the program running to execute the method as claimed in any one of claims 8 to 13.

16. A processor, configured to run a program, the program running in the processor to execute the method as claimed in any one of claims 8 to 13.
